# EUROPÄISCHE PATENTANMELDUNG

(11) **EP 4 814 564 A1**
(43) Veröffentlichungstag der Anmeldung: **30.09.2026**
(21) Anmeldenummer: 26166828.9
(22) Anmeldetag: 23.03.2026
(51) Int. Cl.: G02B 21/00, G02B 21/36, G02B 27/58

(54) **BEWEGUNGSDETEKTION BEI HOCHAUFLÖSENDER MIKROSKOPIE MIT STRUKTURIERTER BELEUCHTUNG**

(30) Priorität: 24.03.2025 DE 102025111338
(71) Anmelder: Carl Zeiss Microscopy GmbH, 07745 Jena (DE)
(72) Erfinder: FOERSTER, Ronny, 07745 Jena (DE)
(74) Vertreter: Patentanwälte Geyer, Fehners & Partner mbB

(57) **Zusammenfassung**

Es wird beschrieben ein Verfahren zur Bewegungsdetektion bei hochauflösender SIM-Mikroskopie einer Probe (4), wobei das Verfahren aufweist Erzeugen von n Rohbildern der Probe (4) durch Beleuchten der Probe (4) mit einem periodischen Beleuchtungsmuster (32), das als quadratische oder hexagonale Gitterstruktur aus hellen Spots ausgebildet ist und dem m Beugungsordnungen zugeordnet sind, wobei m eine positive ungerade ganze Zahl ist und für jedes der n Rohbilder eine individuelle Position des Beleuchtungsmusters (32) in einer Probenebene verwendet wird und die individuellen Positionen sich über ein Phasenintervall von 0 bis 2π verteilen, und wobei *n = m + z* gewählt wird, wobei z eine positive ungerade ganze Zahl mit bevorzugt *z = 1* ist, so dass eine gerade Anzahl an Rohbilder erzeugt wird, die Rohbilder aufsteigend gemäß ihrer jeweiligen individuellen Position im Phasenintervall von 0 bis 2π durchnummeriert werden und das Verfahren weiter aufweist: Zusammenfassen aller ungeradzahlig nummerierten Rohbilder zu einem ersten Vergleichsweitfeldbild der Probe (4) und Zusammenfassen aller geradzahlig nummerierten Rohbilder zu einem zweiten Vergleichsweitfeldbild der Probe (4) und Vergleichen des ersten mit dem zweiten Vergleichsweitfeldbild zur Bewegungsdetektion.

## Beschreibung

Die Erfindung bezieht sich auf die Bewegungsdetektion bei hochauflösender Mikroskopie mit strukturierter Beleuchtung gemäß der sog. SIM-Technik.

Ein entsprechendes Verfahren zur Bewegungsdetektion bei hochauflösender SIM-Mikroskopie einer Probe sieht ein Erzeugen von *n* Rohbildern der Probe durch Beleuchten der Probe mit einem periodischen Beleuchtungsmuster vor, das als periodische Gitterstruktur aus hellen Spots ausgebildet ist und dem *m* Beugungsordnungen zugeordnet sind, wobei für jedes der n Rohbilder eine individuelle Position des Beleuchtungsmusters in einer Probenebene verwendet wird und die individuellen Positionen sich über ein Phasenintervall von 0 bis 2π verteilen.

Ein entsprechendes Mikroskop zur hochauflösenden SIM-Mikroskopie einer Probe, weist auf: einen Beleuchtungsstrahlengang zum Beleuchten der Probe, wobei der Beleuchtungsstrahlengang ein periodisches Beleuchtungsmuster, das als periodische Gitterstruktur aus hellen Spots ausgebildet ist und dem m Beugungsordnungen zugeordnet sind auf die Probe einstrahlt, einen Detektionsstrahlengang zum Weitfeldabbilden der beleuchteten Probe auf einen Detektor, und eine Steuereinrichtung, die den Beleuchtungsstrahlengang zum Verschieben des Beleuchtungsmusters in der Probe ansteuert und den Detektor ausliest und ausgebildet ist zum Erzeugen von *n* Rohbildern der Probe durch Beleuchten der Probe, wobei das Beleuchtungsmuster für jedes der *n* Rohbilder eine individuelle Position in einer Probenebene hat und die individuellen Positionen über ein Phasenintervall von 0 bis 2π verteilt sind.

Dieses Verfahren und dieses Mikroskop verwenden die unten näher erläuterte Lattice SIM-Technik.

Die sog. Structured Illumination Microscopy"-(SIM)-Technik hat sich als mikroskopisches Bildgebungsverfahren etabliert. Sie geht u.a. auf die Veröffentlichungen R. Heintzmann: Saturated patterned excitation microscopy with two-dimensional excitation patterns, Micron 34 (6-7), 283-291 (2003) und M. Gustafsson et al.: Three-Dimensional Resolution Doubling in Wide-Field Fluorescence Microscopy by Structured Illumination, Biophysical Journal 94, 4957-4970 (2008) zurück und sieht eine Beleuchtung der Probe mit einem SIM-Beleuchtungsmuster vor. Die Probe wird wiederholt abgebildet, wobei das Beleuchtungsmuster in verschiedene Positionen zur Probe gebracht wird und für jeden der so realisierten Beleuchtungszustände ein sog. Rohbild aufgenommen wird. Diese Rohbilder werden dann in einem Bildverarbeitungsprozess zusammengefasst, um ein Bild der Probe zu erhalten, das hinsichtlich Auflösung gegenüber einer normalen Weitfeldabbildung mit demselben Mikroskop verbessert ist. Diese Verbesserung wird als "Hochauflösung" bezeichnet, da sie die mit herkömmlicher Weitfeldmikroskopie gemäß dem Abbe-Kriterium erreichbare Auflösung übertrifft.

SIM-Beleuchtungsmuster sind regelmäßig und periodisch. Die individuell positionierten Beleuchtungsmuster unterscheiden sich also nicht in ihrer Struktur, die jeweils identisch ist, sondern in ihrer Position, nämlich Relativlage zur Probe. Am Anfang der Entwicklung stand die Beleuchtung mit einem periodischen Streifenmuster, das verschoben und rotiert wurde. Diese Technik wird mittlerweile als 2D-SIM bezeichnet. Eine Weiterbildung erlaubt die Verbesserung auch der Tiefenauflösung und wird dementsprechend als 3D-SIM bezeichnet. Hierzu wird ein 3D-Beleuchtungsmuster in Form eines Talbot-Musters auf die Probe beleuchtet.

Eine deutliche Beschleunigung der Aufnahme der Rohbilder wurde durch Verwendung dieses mehrdimensional periodischen Multipunkt-SIM-Beleuchtungsmusters aus Spots erreicht, das aus mehreren zueinander interferenzfähigen Teilstrahlen erzeugt werden kann, die zweidimensional und punktsymmetrisch in einer Beleuchtungspupille im Beleuchtungsstrahlengang angeordnet sind. Diese Technik wird als Lattice SIM bezeichnet. Das SIM-Beleuchtungsmuster entsteht hier als Interferenzmuster aus z.B. fünf Teilstrahlen. Es enthält eine Anzahl diskreter Beleuchtungsmusterfrequenzen, die sich aus den Interferenzmöglichkeiten der Teilstrahlen ergibt. Die diskreten, räumlichen Beleuchtungsmusterfrequenzen entsprechen Beugungsordnungen. Lattice SIM wird durch das eingangs genannte Verfahren und das eingangs genannte Mikroskop realisiert und ist näher z.B. in J. Siebenmorgen et al.: Introducing Lattice SIM for ZEISS Elyra 7 - Structured Illumination Microscopy with a 3D Lattice for Live Cell Imaging, ZEISS Technology note, Dezember 2018, https://asset-downloads.zeiss.com/catalogs/download/mic/b05157e2-bcd6-4c82-b9f9-7639b446a74a/EN_WP_Introducing_Lattice_SIM_for_Elyra-7.pdf beschrieben.

Bei Lattice SIM können die Teilstrahlen aus einem Ausgangsstrahl erzeugt werden, der an einem in einer Zwischenbildebene das Beleuchtungsstrahlengangs liegenden 2D-Gitter in mehrere Beugungsordnungen, die als zueinander interferenzfähige Teilstrahlen in der Beleuchtungspupille eines Beleuchtungsstrahlengangs erscheinen, gebeugt wird. Der Begriff Beugungsordnung stellt auf die Erzeugung des Beleuchtungsmusters durch Interferenz von Teilstrahlen in der Pupille ab. Der Begriff Beugungsordnung hat nichts zu tun mit einer Beugung an einem Gitter, die zum Bereitstellen der Teilstrahlen verwendet werden kann. Die Beugungsordnungen sind deshalb dem Beleuchtungsmuster zuzuordnen und nicht einem im Aufbau möglicherweise beleuchteten Gitter.

Es werden mehrere Rohbilder bei individuell positionierten SIM-Beleuchtungsmustern - entsprechend individuell variierten Intensitäten der Teilstrahlen - aufgenommen. Die Rohbilder enthalten Moiré-Muster mit den höheren Frequenzen der Probeninformation. Für die SIM-Mikroskopietechnik ist eine besondere Bildauswertung erforderlich, um aus dem Moiré-Muster das hochaufgelöste Bild der Probe zu erhalten. Mit dieser Auswertung befasst sich im Detail die US 11 867 894 B1, die hinsichtlich der Bildauswertung hier vollumfänglich durch Zitat eingebunden sei.

Mit der SIM-Technik befassen sich weiter: Neil M.A.A et al.: Method of obtaining optical sectioning by using structured light in a conventional microscope. Optics Letters 22, 1905-1907 (1997); Heintzmann R. und Huser T.: Super-Resolution Structured Illumination Microscopy. Chemical Reviews 117 (23), 13890-13908 (2017); Ströhl F. und Kaminski C.: Frontiers in structured illumination microscopy, Optica 3, 667-677 (2016); Schermelleh et al.: Super-resolution microscopy demystified, Nature Cell Biology 21, 72-84 (2019); Schropp M. und Uhl R.: Two-dimensional structured illumination microscopy, Journal of Microscopy 256, 23-36 (2014); Ingerman E.A. et al.: Signal, noise and resolution in linear and nonlinear structured-illumination microscopy, Journal of Microscopy 273, 3-25 (2019); Guo, Y. et al.: Visualizing Intracellular Organelle and Cytoskeletal Interactions at Nanoscale Resolution on Millisecond Timescales, Cell 175, 1430-1442 (2018); Frohn J. T. et al.: True optical resolution beyond the Rayleigh limit achieved by standing wave illumination, Proceedings of the National Academy of Sciences of the United States of America 97, 7232-7236 (2000); Beck M. et al.: Sub-100-nanometre resolution in total internal reflection fluorescence microscopy, Journal of Microscopy 232, 99-105 (2008); Gliko O. et al.: Fast two-dimensional standing-wave totalinternalreflection fluorescence microscopy using acousto-optic deflectors, Optics Letters 34, 836-838 (2009); Fiolka R.: Clearer view for TIRF and oblique illumination microscopy, Optics Express 24, 29556-29567 (2016); Young L.J. et al.: A Guide to Structured Illumination TIRF Microscopy at High Speed with Multiple Colors, Journal of Visualized Experiments 111 (2016), Kner P. et al.: "Super-Resolution Video Microscopy of Live Cells by Structured Illumination", Nature Methods, Vol. 6, S.339 (2009), und Guo M. et al.: Single-shot super-resolution total internal reflection fluorescence microscopy, Nature Methods 15, 425-428 (2018).

Die Anzahl der Rohbilder limitiert die Aufnahmerate. Mehr Rohbilder benötigen mehr Zeit. Die Anzahl der Rohbilder verringert zudem die Zahl an möglichen hochaufgelösten Bildern einer biologischen Probe, also die möglichen Wiederholungen des Mikroskopieprozesses, da jede Belichtung Fotoschädigungen erzeugt, bis schließlich die Probe störend geschädigt ist.

Die begrenzte Aufnahmerate stellt sich weiterhin als Problem heraus, wenn man die Bewegung eines Objektes erfassen will. Dies geschieht im Stand der Technik z.B. dadurch, dass zwei Weitfeldbilder zu verschiedenen Zeitpunkten aufgenommen werden und ein Differenzbild berechnet wird. Das Differenzbild ist in Probenbereichen, in denen sich die Probe nicht verändert hat, gleich Null. In Bildbereichen, in denen sich Probe verändert, d.h. bewegt hat (entweder Bewegung der ganzen Probe oder Bewegung innerhalb der Probe), ergibt sich eine nicht verschwindende Differenz. Aufgrund der verschiedenen Beleuchtungsmuster in den einzelnen Rohbildern bei der SIM-Mikroskopie sind die einzelnen Rohbilder für diese Bewegungsdetektion ungeeignet. Die unterschiedlichen Beleuchtungszustände, die den Rohbildern zu Grunde liegen, würden bei einem Vergleich von Rohbildern zu einem nichtverschwindenden Bildinhalt führen, selbst wenn keine Bewegung auftrat.

Für SIM-Mikroskopie gibt es weitere Ansätze, welche eine Bewegungsdetektion ermöglichen. Die Dissertation R. Förster: "Detektion und Klassifizierung von Bewegungsartefakten in der Mikroskopie mit strukturierter Beleuchtung", Friedrich-Schiller-Universität Jena, 2018, ermöglicht eine Bewegungsdetektion für 2D-SIM. Die Veröffentlichung R. Förster et al.: "Motion artifact detection in structured illumination microscopy for live cell imaging", Optics Express, Vol. 24, No. 19, 19. September 2016, S. 22121-22133, berechnet zwei unabhängige Weitfeldbilder aus verschiedenen Fokalebenen einer 3D-Aufnahme. Dieser Algorithmus ist damit für die Bewegungsdetektion in einer Fokalebene nicht geeignet. Hierzu ist man bei Lattice SIM deshalb weiterhin auf die rekonstruierten hochaufgelösten Bilder zu Bewegungsdetektion angewiesen. Deshalb ist die Photonenanzahl verdoppelt bzw. die Bildaufnahmerate gegenüber der Bilderzeugung ohne Bewegungserfassung halbiert.

Der Erfindung liegt die Aufgabe zu Grunde, eine Bewegungsdetektion bei der Mikroskopie mit der Lattice SIM-Technik zu schaffen, welche keine Verdopplung von Photonenanzahl und Bildaufnahmedauer benötigt und auch in nur einer Fokalebene arbeiten kann.

Die Erfindung ist in den unabhängigen Ansprüchen definiert. Die abhängigen Ansprüche betreffen bevorzugte Ausgestaltungen.

Zur Bewegungsdetektion bei hochauflösender SIM-Mikroskopie werden n Rohbilder der Probe erzeugt. Dazu wird die Probe mit einem periodischen Beleuchtungsmuster beleuchtet und aus einer Probenebene abgebildet. Das Beleuchtungsmuster ist mindestens in einer Schnittebene als 2D-periodische Gitterstruktur aus hellen Spots ausgebildet. Die Anordnung der hellen Spots ist in zwei orthogonalen lateralen Raumrichtungen in derselben Periode angeordnet. Sie hat in vielen Fällen auch eine Periodizität in Tiefenrichtung; es liegt also meist ein Beleuchtungsmuster in Form einer (3D)-Gitterstruktur aus hellen Spots vor. Diesem Beleuchtungsmuster sind Beugungsordnungen zugeordnet. Diese Beugungsordnungen sind diskrete Raumfrequenzkomponenten des Beleuchtungsmusters; in der englischsprachigen Literatur werden sie als "spatial frequency components of the illumination intensity" bezeichnet, so z.B. 2008 von Gustafsson. Man kann dies so verstehen, dass die 3D-Gitterstruktur aus hellen Spots physikalisch interpretiert werden kann als Beugungsordnungen von interferenzfähigen Einzelstrahlen, die in einer Beleuchtungspupille des entsprechenden Beleuchtungsstrahlengangs angeordnet sind, wie oben allgemein zur SIM-Technik bereits erläutert. Die Begriffe Beugungsordnungen und diskrete Raumfrequenzkomponenten des Beleuchtungsmusters werden hier austauschbar verwendet.

Die Tiefe ist entlang der Einfallsrichtung der Strahlung zu sehen. Die lateralen Richtungen liegen quer dazu. Einem solchen SIM-Beleuchtungsmuster sind *m* Beleuchtungsordnungen zugeordnet (es hat *m* diskrete Raumfrequenzkomponenten). *m* ist eine positive ganze Zahl. Wenn das Beleuchtungsmuster eine nullte Beugungsordnung umfasst, ergibt sich eine ungerade Anzahl *m* von Beugungsordnungen, da die nullte Ordnung sowie Paare höherer Ordnungen (±1 , ±2, ...) auftreten. Es gibt aber auch Ausführungsformen, bei denen m gerade ist, wenn nämlich eine nullte Beugungsordnung nicht erzeugt oder unterdrückt wird.

Die Probe wird längs einer optischen Achse auf einem Detektor abgebildet, der aus der Probenebene Strahlung aufnimmt. Sie wird so wiederholt beleuchtet und abgebildet, wobei bei jedem Beleuchtungs- und Abbildungsprozess ein Rohbild der Probe aufgenommen wird. Insgesamt werden *n* Rohbilder auf diese Weise aufgenommen. Sie unterscheiden sich hinsichtlich der individuellen Position des Beleuchtungsmusters in der senkrecht zur optischen Achse liegenden Probenebene. Für jedes dieser Rohbilder ist eine individuelle Position des Beleuchtungsmusters gegeben, wie dies in der SIM-Technik bekannt ist. Aus den aufgenommen *n* Rohbildern wird ein hochaufgelöstes Weitfeldbild der Probe erzeugt. Für jedes der *n* Rohbilder wird eine individuelle laterale Position des Beleuchtungsmusters (d.h. individuell verschoben in der Probenebene, die folglich für alle Rohbilder gleich ist, d.h. es liegt für die Aufnahme aller Rohbilder eine fixe Fokalebene vor.) verwendet. Die individuellen Positionen sind gegenüber einer Grundstellung phasenverschoben und decken insgesamt ein Phasenintervall von 0 bis 2π ab.

Es wird nun eine gerade Anzahl an Rohbildern aufgenommen; entweder indem eine nullte Beugungsordnung nicht erzeugt oder unterdrückt wird (*m* und *n* sind a priori gerade) oder indem die Zahl der Rohbilder auf eine gerade Anzahl aufgestockt wird (m ist ungerade und Rohbildanzahl wird auf gerades *n* erhöht). Im letzteren Fall wird die Zahl *n* der Rohbilder so gewählt, dass sie einerseits größer als die (ungerade) Anzahl m an Beugungsordnungen ist und zum anderen gerade ist. Es werden also *n = m* + *z* Rohbilder aufgenommen, wobei *z* eine positive ungerade ganze Zahl ist. Besonders bevorzugt ist z = 1 gewählt.

Diese gerade Anzahl an Rohbildern wird durchnummeriert. Dies geschieht entsprechend ihrer individuellen Position im Phasenintervall von 0 bis 2π in aufsteigender Reihenfolge. Das Rohbild, das dem unteren Ende (0) des Phasenintervalls am nächsten liegt, erhält also die Nummer "1". Das ihm nächstliegende Rohbild die Nummer "2" usw. bis die letzte Nummer "n" dem Rohbild zugeordnet wurde, das dem oberen Ende (2π) des Phasenintervalls am nächsten liegt. Die derart durchnummerierten Rohbilder "1", "2", ... "n" werden nun zusammengefasst, wobei alle ungeradzahlig nummerierten Rohbilder (nachfolgend "ungerade Rohbilder") zu einem ersten Vergleichsweitfeldbild zusammengefasst werden und alle geradzahlig nummerierten Rohbilder (nachfolgend "gerade Rohbilder") zu einem zweiten Vergleichsweitfeldbild. Diese Vergleichsweitfeldbilder haben nicht zwingend Hochauflösung, erlauben es aber sehr bequem, eine Bewegungsdetektion auszuführen, da sie beide auf vergleichbare Beleuchtungszustände (einmal die ungeradzahlig nummerierten Rohbilder und das andere Mal die geradzahlig nummerierten Rohbilder) zurückgehen. Ein Vergleich der beiden Vergleichsweitfeldbilder wird deshalb zur Bewegungsdetektion ausgeführt.

Für ein Mikroskop zur hochauflösenden SIM-Mikroskopie einer Probe ist analog ein Beleuchtungsstrahlengang zum Beleuchten der Probe vorgesehen, der das periodische Beleuchtungsmuster aus hellen Spots auf die Probe einstrahlt. Ein Detektionsstrahlengang des Mikroskops ist zum Weitfeldabbilden der beleuchteten Probe auf einen Detektor aus einer Probenebene konfiguriert. Eine Steuereinrichtung, die insbesondere einen Prozessor und einen elektronischen Speicher aufweist, steuert den Beleuchtungsstrahlengang zum Einstellen der individuellen Positionen des Beleuchtungsmusters an und liest den Detektor entsprechend aus. Er ist ausgebildet, die anhand des Verfahrens erläuterten Rohbilder zu erzeugen und die Bewegungsdetektion auszuführen.

Soweit hier Verfahrensmerkmale beschrieben werden, ist in Ausführungsform die Steuereinrichtung ausgebildet, diese Merkmale auszuführen. Sie kann dazu einen geeignet programmierten Prozessor aufweisen. Soweit die Arbeitsweise der Steuereinrichtung beschrieben ist, sind damit auch analoge Verfahrensmerkmale offenbart.

Das Verfahren/Mikroskop benötigt somit bestenfalls nur ein zusätzliches Rohbild, um eine gerade Anzahl zu erhalten und dann durch Zusammenfassen der geraden und der ungeraden Rohbilder zwei Vergleichsweitfeldbilder zu erzeugen und eine Bewegungsdetektion auszuführen. Im Falle von *m* = 13 Beugungsordnungen würde man ohne Bewegungsdetektion 13 Rohbilder anfertigen. Nun wird in bevorzugten Ausführungsformen ein einziges zusätzliches Rohbild erzeugt (natürlich sind auch 3, 5, 7 ... zusätzliche Rohbilder möglich), um die Bewegungsdetektion an der nun insgesamt geradzahligen Anzahl an Rohbildern auszuführen. Dadurch wird die Photonenbelastung bzw. die Bildaufnahmedauer weitaus geringfügiger verschlechtert, als bei dem herkömmlichen Ansatz, der für die Lattice SIM-Technik zwei hochaufgelöste Weitfeldbilder benötigt, also 2·*n* Rohbilder benötigen würde. Im Falle von 13 Beugungsordnung bräuchte der Stand der Technik 26 Rohbilder, die hier beschriebene Lösung kann dann mit 14 arbeiten, verursacht also nur etwa 54% der Photonenbelastung bzw. der Bildaufnahmedauer, die im Stand der Technik erforderlich war.

Wesentlich hierfür ist es, dass die eigentlich zur Rekonstruktion nötige ungerade Zahl der Rohbilder auf eine gerade Anzahl ergänzt wird, um die Rohbilder abwechselnd zum ersten bzw. zweiten Vergleichsweitfeldbild zusammenzufassen und so zwei Vergleichsweitfeldbilder zu erhalten, die hinsichtlich des Beleuchtungszustandes identisch sind und deshalb einer Bewegungsdetektion beispielsweise durch Differenzbildung unterzogen werden können.

Bei der Erzeugung der Rohbilder haben alle Rohbilder dieselbe Anzahl an Beugungsordnungen (diskrete Raumfrequenzkomponenten des Beleuchtungsmusters). Da die Rohbilder, die zum ersten bzw. zum zweiten Weitfeldbild zusammengefasst werden, sich hinsichtlich der abgedeckten Phasenlagen der individuellen Position des Beleuchtungsmusters gleichen, entspricht die Summe aller geraden bzw. ungeraden Rohbilder dem unmodulierten Weitfeld, weshalb das für die Bewegungsdetektion herangezogene Vergleichsweitfeldbild auch tatsächlich ein Weitfeldbild ist.

Die Erzeugung des hochaufgelösten Weitfeldbildes, das gemäß den bekannten Bildauswertungen in der Lattice SIM-Technik ausgeführt wird, kann nun im Weiteren daran geknüpft werden, dass keine störende Bewegung vorlag. Hierbei kann geprüft werden, ob eine vorbestimmte Maximalbewegung nicht überschritten wurde. Falls die Bewegungsdetektion ergab, dass eine vorbestimmte Maximalbewegung doch überschritten wurde, kann ergänzend oder alternativ das hochaufgelöste Weitfeldbild (dennoch) erzeugt werden und mit einem Bewegungshinweis versehen werden. Dieser Bewegungshinweis kann insbesondere einen Bildbereich angeben, in dem eine Bewegung detektiert wurde, weil ein vorbestimmter Unterschiedsschwellwert zwischen dem ersten und dem zweiten Vergleichsweitfeldbild überschritten wurde. Damit wird in Ausführungsformen immer ein hochaufgelöstes Weitfeldbild erzeugt, in dem im Falle einer Bewegungsdetektion beispielsweise Bildbereiche markiert sind, in denen eine Bewegung detektiert wurde. Dies ist insbesondere dann vorteilhaft, wenn es sich um Bewegungen innerhalb der Probe handelt, beispielsweise weil lebende Strukturen abgebildet wurden. Auf diese Weise können die nicht dieser Bewegung unterworfenen Bildbereiche hochaufgelöst abgebildet werden und der Benutzer hat eine Information drüber, welche Bildbereiche möglicherweise durch eine Bewegung korrumpiert sind.

Nimmt man zuerst die geraden Rohbilder und dann die ungeraden auf, so wird der zeitliche Abstand zwischen den beiden Vergleichsweitfeldbildern maximiert, was die Empfindlichkeit der Bewegungsdetektion steigert. Dies kann einfach dadurch erreicht werden, dass die individuellen Positionen über das Phasenintervall von 0 bis 2π nicht von der einen Intervallgrenze zur anderen Intervallgrenze nacheinander durchgefahren werden, sondern in einem ersten Durchlauf mit einem größeren Abstand zwischen den individuellen Positionen zuerst die späteren ungerade nummerierten (oder geraden) Rohbilder erzeugt werden und dann die gerade nummerierten (oder ungeraden).

Um möglichst identische Beleuchtungszustände in den beiden Vergleichsweitfeldbildern zu erhalten, ist es bevorzugt, dass die individuellen Positionen direkt in der Nummerierung aufeinanderfolgende Rohbilder um eine Phasenschritt von 2π/*n* beabstandet sind. Die individuellen Positionen decken dann das Phasenintervall von 0 bis 2π äquidistant ab. Dann sind die Vergleichsweitfeldbilder besonders empfindlich auf Bewegungen zu vergleichen. Von dieser äquidistanten Verteilung kann jedoch abgewichen werden, wobei die Abweichung maximal 2%, bevorzugt maximal 1%, besonders bevorzugt maximal 0,5% und ganz besonders bevorzugt 0,1% beträgt. Dies reduziert die Präzisionsanforderungen im Beleuchtungsstrahlengang. Kombinationen sind möglich, d.h. es kann die äquidistante Anordnung gemäß 2π/*n* zwischen einigen der Positionen der Rohbilder vorliegen und eine Abweichung in den genannten Grenzen für andere benachbarte Rohbilder.

Das Weitfeldbild wird bevorzugt aus allen aufgenommenen Rohbildern erzeugt, auf jeden Fall sowohl aus geradzahlig nummerierten als auch aus ungeradzahlig nummerierten. In den eingangs genannten Auswertungsverfahren des Standes der Technik ist es bevorzugt, alle erzeugten Rohbilder heranzuziehen. Es ist aber auch gleichermaßen möglich, den Rechenaufwand zu reduzieren, indem der aus US 11 086 7894 B1 bekannte Ansatz verwendet wird, der weniger Rohbilder benötigt.

Das Zusammenfassen der Rohbilder zum ersten bzw. zweiten Vergleichsweitfeldbild kann im einfachsten Fall durch Aufsummieren der jeweiligen Rohbilder erfolgen. Dies ist insbesondere dann zu bevorzugen, wenn die oben erwähnte äquidistante Anordnung der Beleuchtungsmuster im Phasenintervall verwendet wird. Besonders bevorzugt in Kombination mit einer nicht vollständig gleichmäßigen Anordnung ist es, die Rohbilder vor dem Aufsummieren mit einer Wichtungsfunktion zu gewichten, die besonders bevorzugt von der Abweichung des individuellen Rohbilds von der ideal gleichmäßig verteilten Phasenlage des jeweiligen Beleuchtungsmusters abhängt. Die Wichtungsfunktion kann einen Multiplikator bereitstellen, der z.B. aus der Penrose-pseudo-inversen der Mischungsmatrize abgeleitet ist.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: ein Blockschaltbild einer Ausführungsform eines Verfahrens zur Lattice SIM-Mikroskopie;
- Fig. 2: ein Mikroskop, das zur Erzeugung von Rohbildern, die im Verfahren gemäß Fig. 1 ausgewertet werden, verwendet werden kann,
- Fig. 3: eine Schemadarstellung einer Beleuchtungseinrichtung des Mikroskops der Fig. 2,
- Fig. 4a)-4f): Schemadarstellungen von Beugungsordnungen (diskrete Raumfrequenzkomponenten des Beleuchtungsmusters), die zur Rohbilderzeugung verwendet werden.

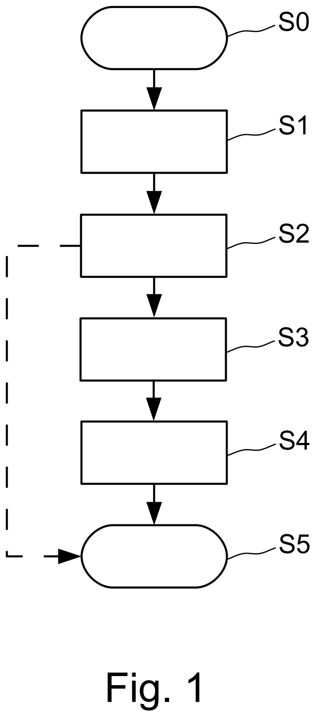

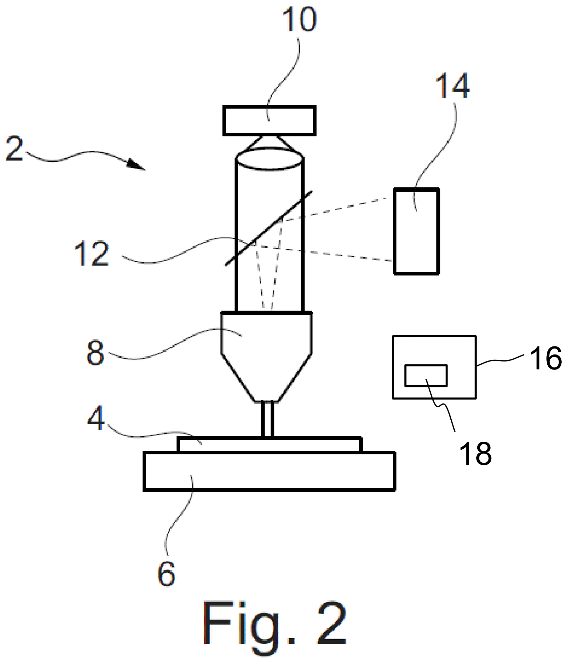

Fig. 1 zeigt als Blockschaltbild ein Verfahren zur Bewegungsdetektion in der Lattice SIM-Mikroskopie. Das Verfahren umfasst im Wesentlichen Schritte S0 bis S5, wovon der Schritt S3 ein Schritt ist, in dem eine Bewegungsdetektion ausgeführt wird. Fig. 2 zeigt schematisch ein zur Verfahrensausführung geeignetes Mikroskop 2, das nach der Lattice SIM-Technik arbeitet. Das Mikroskop 2 bildet eine Probe 4 ab, die sich auf einem Probenträger 6 befindet. Die Abbildung erfolgt mittels eines Objektivs 8, das ein Objektfeld in der Probe 4 durch eine nicht weiter bezeichnete Tubuslinse auf einen Detektor 10 abbildet. Über einen Strahlteiler 12 beleuchtet eine Beleuchtungseinrichtung 14 die Probe 4 durch das Objektiv 8 derart, dass eine hinsichtlich der Positionierung in der Probe 4 einstellbare strukturierte Beleuchtung erfolgt, wie sie für die Lattice SIM-Technik dem Fachmann bekannt ist. Das Mikroskop 2 wird von einer Steuereinrichtung 16, umfassend u.a. einen Prozessor 18, gesteuert.

Das Verfahren beginnt mit einem Start S0. Im Schritt S1 wird die Probe 4 mehrfach abgebildet, wobei sie mit einem Multipunkt-SIM-Beleuchtungsmuster beleuchtet wird, wie für die Lattice SIM-Technik bekannt. Die Rohbilder unterscheiden sich hinsichtlich des Beleuchtungsmusters, wie für Lattice SIM eingangs erläutert. Für jede Positionierung des Beleuchtungsmusters entsteht aus der Probenebene ein Rohbild durch Abbildung der Probe 4 auf den Detektor 10. Somit liegen am Ende des Schrittes S1 *n* Rohbilder vor. Alle Rohbilder sind ein Abbild ein und derselben Probe aus derselben Probenebene, wobei die Probe mit dem Beleuchtungsmuster beleuchtet ist. Die Rohbilder unterscheiden sich dahingehend, wie das Beleuchtungsmuster individuell positioniert ist. Die individuelle Positionierung wird jeweils durch eine Beleuchtungsmusterfunktion angegeben, welche die Lage des Beleuchtungsmusters definiert oder wiedergibt. Die Angabe *n* bezieht sich auf die Zahl der Positionierungen, die aufgrund der Lattice SIM-Technik i.d.R. Verschiebestellungen des Beleuchtungsmusters in der Probe 4 sind. Alle Rohbilder stammen aus derselben Probenebene, werden also bei fixer Fokalebene abgebildet.

Das Beleuchtungsmuster weist Beleuchtungsmusterfrequenzen auf, die z.B. von einer Erzeugung des Beleuchtungsmusters durch Interferenz stammen. Wie vorstehend bereits ausgeführt und nachfolgend noch weiter erläutert, stellen die Beleuchtungsmusterfrequenzen m Beugungsordnungen, also diskrete Raumfrequenzkomponenten des Beleuchtungsmusters dar. Diese Interpretation ist üblich und sinnvoll, selbst wenn die Erzeugung anderweitig stattfand. Die diskreten Frequenzen der *m* Beugungsordnungen entsprechen räumlichen Beleuchtungsmusterfrequenzen, allerdings unter der Berücksichtigung, dass im Frequenzraum die Beugungsordnungen konjugiert-komplexe Größen sind. Es gibt also oberhalb nullten Beugungsordnung für jede der im Ortsraum definierten Beleuchtungsmusterfrequenzen immer Paare von zwei betragsgleichen Beugungsordnungen im Frequenzraum. Dies ist aus dem Stand der Technik, z.B. der Publikation von Gustafsson (2008), bekannt. Aufgrund der Lattice SIM-Technik gilt, dass *m* immer ungerade (und natürlich ganzzahlig) ist, denn zusätzlich zur nullten Beugungsordnung gibt es immer Paare höherer Beugungsordnung (±1 , ±2, ±3 usf.). Ein üblicher Fall ist *m* = 13.

Jedem der *n* Rohbilder ist genau eine der *n* Beleuchtungsmusterfunktionen zugeordnet, welche jeweils die Position, i.d.R. die Verschiebung, als Phase gegenüber einer Grundstellung des Beleuchtungsmusters angibt. Mit den in Schritt S1 erzeugten *n* Rohbildern, den *n* Beleuchtungsmusterfunktionen und der PSF wird später im Schritt S3 eine Entfaltung unter Verwendung eines Wiener-Filters oder ein Iterationsverfahren, das z.B. in US 11 867 894 B2 näher erläutert ist, ausgeführt.

Die Gesamtzahl *n* der Rohbilder ist gleich der Gesamtzahl *n* der Beleuchtungsmusterfunktionen, d.h. der Zahl der individuellen Positionen (i.d.R. Verschiebestellungen), die das Beleuchtungsmuster über alle Rohbilder hinweg in der Probenebene hat, da jede Beleuchtungsmusterfunktion genau eine der verwendeten individuellen Positionen - im Sinne von Phasen der Position des Beleuchtungsmusters - beschreibt.

Im Stand der Technik wird die Zahl *n* der Rohbilder passend zur Zahl *m* der Beugungsordnungen gewählt. Wenn die nullte Beugungsordnung mit höheren Beugungsordnungen in einer geraden Anzahl auftritt, ist folglich auch die Zahl *m* im Stand der Technik ungeradzahlig, denn es wird die nullte Beugungsordnung um mindestens die +/-1.-Beugungsordnung und die +/-2.-Beugungsordnung ergänzt. Wenn das Beleuchtungsmuster keine nullte Beugungsordnung hat, ist *m* gerade.

Um nun eine Bewegungsdetektion möglichst einfach ausführen zu können, wird in allen Ausführungsformen im Schritt S1 eine gerade Anzahl von Rohbildern erzeugt. Im Falle *m* ungerade gilt dann *n = m* + *z*, wobei nicht nur *m* ungerade und ganzzahlig ist, sondern auch die Ergänzung *z* auf eine gerade Anzahl von Rohbildern. Im einfachsten und zu bevorzugenden Fall ist *z* = 1.

Dass *n* gerade ist, ist für die Bewegungsdetektion bedeutsam. Auf Basis dieser geraden Anzahl an Rohbildern erfolgt im Schritt S2 eine Bewegungsdetektion. Dazu werden die Rohbilder durchnummeriert entsprechend der individuellen Position des Beleuchtungsmusters, die für das jeweilige Rohbild verwendet wurde. Die Aufreihung erfolgt dabei gemäß der Anordnung im Phasenintervall von 0 bis 2π wie eingangs erläutert. Die derart durchnummerierten Rohbilder werden dann zusammengefasst, wobei die ungeradzahligen Rohbilder zu einem ersten Vergleichsweitfeldbild zusammengefasst werden und die geradzahlig nummerierten zu einem zweiten Vergleichsweitfeldbild. Im Fall der üblichen Lattice SIM-Technik werden bevorzugt 14 Rohbilder aufgenommen, und die Rohbilder mit den Nummern "1 ", "3", "5", "7", "9", "11", "13" werden zum ersten Vergleichsweitfeldbild zusammengefasst, und die Rohbilder mit der Nummer "2", "4", "6", "8", "10", "12", "14" zum zweiten Vergleichsweitfeldbild. Hierdurch werden im jeweiligen Vergleichsweitfeldbild alle SIM-Ordnungen eliminiert und es entstehen zwei unabhängige Weitfeldbilder, die dann zur Bewegungsdetektion verwendet werden können, da sie sich hinsichtlich der Beleuchtungszustände gleichen. Dazu muss eine gerade Anzahl an Rohbildern vorliegen. Bevorzugt wird, wie nachfolgend noch erläutert, die Zusammenfassung durch Addition der jeweiligen Rohbilder vorgenommen.

Der Vergleich der Vergleichsweitfeldbilder kann im einfachsten Fall durch eine Differenzbildung vorgenommen werden. Bildbereiche, in denen nach dieser Differenzbildung ein Bildinhalt besteht, sind durch Bewegungen beeinflusst. Diese Information kann entweder dazu verwendet werden, das Verfahren ohne Schritt S3 gleich zum Ende S5 zu führen, d.h. kein hochaufgelöstes Weitfeldbild zu berechnen und damit eine aufwendige Signalauswertung einzusparen, die zu einem mit Bewegungsartefakten versehenen Bild geführt hätte, oder das Weitfeldbild wird berechnet, allerdings mit einem Hinweis auf eine erfasste Bewegung versehen. Dieser Hinweis kann beispielsweise diejenigen Bildbereiche markieren, in denen die Detektion festgestellt wurde, beispielsweise weil das Differenzbild dort einen Bildinhalt hatte.

Wenn das hochaufgelöste Weitfeldbild berechnet wird, wird als Ergebnis des Schrittes S3 im Schritt S4 das hochaufgelöste Bild der Probe 4 ausgegeben. Es basiert auf den Rohbildern. Allerdings wurden nun abweichend vom Stand der Technik eine gerade Anzahl von Rohbildern verwendet und das hochaufgelöste Weitfeldbild ist entweder nicht von Bewegungsartefakten betroffen (keine Bewegung detektiert) oder es wird ein Hinweis ausgegeben, dass Bewegungsartefakte vorliegen, besonders bevorzugt durch Markierung der betroffenen Bildbereiche. Natürlich kann das Verfahren dann wiederholt werden, um ein weiteres hinsichtlich Bewegung überprüftes und ggf. mit einer Markierung als Hinweis versehenes hochaufgelöstes Bild zu erzeugen.

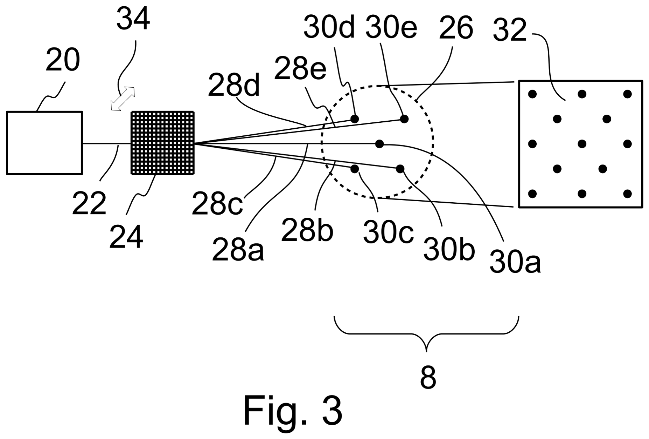

Ein Beispiel für die Realisierung der Beleuchtung ist schematisch in Fig. 3 gezeigt. Die Beleuchtungseinrichtung 20 stellt einen Ursprungsstrahl 22 bereit, beispielsweise aus einem (nicht weiter dargestellten) Laser. Mit Hilfe eines in einer Zwischenbildebene angeordneten 2D-Kreuzgitters 24 wird dieser Ursprungsstrahl 22 in fünf Teilstrahlen 24a bis 24e zerlegt, die optisch von (nicht weiter dargestellten) geeigneten Linsen oder anderen optischen Elementen so geformt werden, dass in einer Eintrittspupille 26 (in der englischsprachigen Literatur auch als "back focal plane" bezeichnet) des Objektivs 8 fünf Lichtpunkte 30a bis 30e, mit einem zentralen Punkt 30a für den zentralen Teilstrahl und vier im Quadrat darum angeordneten benachbarten Punkten 30b bis 30e für seitliche Teilstrahlen, entstehen. Die fünf Punkte in der Objektivpupille 26 führen dazu, dass das Objektiv 8 in der Probe 4 durch Interferenz ein SIM-Beleuchtungsmuster 32 bildet. Die Darstellung der Fig. 3 zeigt dabei das SIM-Beleuchtungsmuster 32 in Form dessen Fourierbild. In räumlicher Darstellung ist es ein zweidimensionales Muster aus leuchtenden Spots, die in Form eines quadratischen Gitters angeordnet sind. Das Fourierbild des SIM-Beleuchtungsmusters 32 der Fig. 3 zeigt jedoch, dass durch die Interferenz der Strahlung aus den leuchtenden Punkten 30a bis 30e 13 Beugungsordnungen entstehen. Dies wird später noch erläutert. Dieses Muster an Lichtpunkten in der Beleuchtungspupille 9 führt in Fourierdarstellung zu dem gezeigten Muster der Beleuchtungsintensitäten in der Probenebene. Jeder Punkt in der Fourierdarstellung des Beleuchtungsmusters 32 entspricht einer Beugungsordnung. Je zentrumsferner ein Punkt liegt, desto höher ist die Beugungsordnung. Die Punkte 30a bis 30e könnten auch anderweitig erzeugt werden, z.B. durch in der Pupille endenden Lichtleitfasern oder geeignet angeordneten Kippspiegelmatrizen.

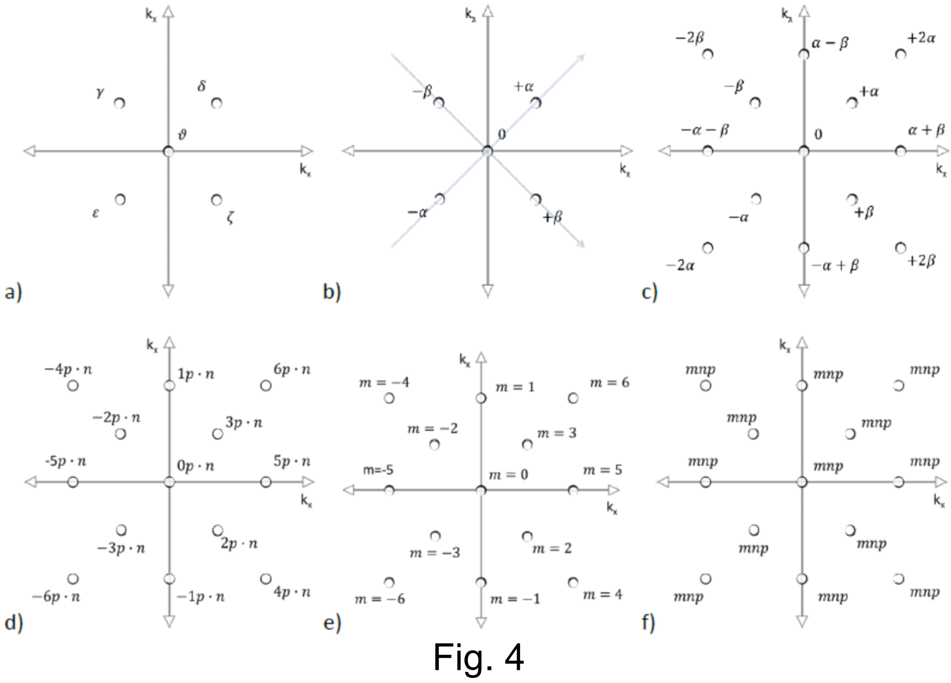

Die individuellen Beleuchtungsmuster für die Rohbilder werden erzeugt, indem das Gitter 24, welches in einer Zwischenbildebene des Beleuchtungsstrahlenganges steht, senkrecht zur optischen Achse verschoben wird, wobei die Verschiebung im Ergebnis schrägt zu den rechtwinkligen Achsen des quadratischen Gitters liegen. Diese Verschiebung ist in Fig. 3 durch einen Pfeil 34 symbolisiert, der eine Verschiebung quer zu den Hauptachsen des quadratischen Kreuzgitters zeigt. Die Verschiebung erfolgt in 14 Stufen innerhalb des Phasenintervalls von 0 bis 2π, so dass 14 individuelle Positionen und damit 14 verschiedene Modulationen der Intensität der leuchtenden Punkte 30a bis 30e in der Objektivpupille 26 erhalten werden. Dies wird nachfolgend anhand der Fig. 4a) bis 4f) noch näher erläutert.

Die hier beschriebene Ausführungsform verwendet nur rein exemplarisch ein quadratisches Gitter. Eine hexagonale Gitterstruktur kommt gleichermaßen in Frage.

Die individuellen Rohbilder werden erzeugt, indem die Probe 4 jeweils mit dem individuellen Beleuchtungsmuster 32 beleuchtet und das von der Probe 4 reflektierte oder im Fall der Fluoreszenzanregung fluoreszenzemittierte Licht registriert wird.

Die in Fig. 3 gezeigte Erzeugung des Beleuchtungsmusters 32 durch Interferenz von in der Pupille liegenden, auf die Punkte 30a bis 30e fokussierten Teilstrahlen ist exemplarisch, hat sich jedoch aus historischen Gründen als übliche Betrachtungsweise herausgebildet, in der man die unterschiedlichen, diskreten Frequenzen, die im Beleuchtungsmuster 32 vorhanden sind, als Beugungsordnungen bezeichnet. Signaltechnisch stellen sie Trägerfrequenzen dar. Die Beugungsordnungen entsprechen oberhalb der Grundfrequenz/nullten Beugungsordnung räumlichen Beleuchtungsmusterfrequenzen, allerdings als konjugiert-komplexe Größen, so dass oberhalb der Grundfrequenz immer Paare von zwei betragsgleichen Beugungsordnungen vorliegen. Die Grundfrequenz entspricht einer nullten Beugungsordnung. Es gibt zusätzlich 12 weitere Beugungsordnungen.

Dies würde bei Lattice SIM 13 Rohbilder erfordern, um die Bildauswertung mit maximaler Auflösung auszuführen (weniger Rohbilder wären unter gewissen, möglicherweise hinnehmbaren Einschränkungen möglich; siehe US 11 867 894 B1). Statt 13 Rohbildern werden nun in Ausführungsformen aber 14 Rohbilder erzeugt, also 14 Verschiebestellungen des Gitters 24 verwendet. Die Ausführungsformen arbeiten deshalb mit gegenüber dem Stand der Technik erhöhter Anzahl an Rohbildern. Zur Erreichung der Hochauflösung ist dies nicht erforderlich; es wird jedoch zur Bewegungsdetektion das 14. Rohbild aufgenommen (n = 14).

Fig. 4 zeigt die Bedeutung der Beugungsordnungen bei der Entstehung des Bildes nach der Lattice SIM-Technik. Teilfigur 4a) zeigt die fünf Ordnungen 30a bis 30e, die zur Erläuterung fünf individuelle Amplituden haben könnten. Die Darstellung ist in einem Fourierdiagramm. Die Amplituden sind mit kleinen griechischen Buchstaben bezeichnet. Aufgrund der Bewegung des Gitters 24 reduzieren sich die möglichen Amplituden auf zwei unabhängige Grundwerte α, β, die einmal mit positiven und einmal mit negativen Vorzeichen auftreten können. Die Amplitude der nullten Beugungsordnung sei in dieser Betrachtung auf einen Einheitswert normiert. Die Bewegung des Gitters 24 entlang der beiden Hauptachsen, die in Fig. 4b) rein schematisch eingetragen ist, moduliert die Intensität der außen liegenden Punkte 30b bis 30e. Durch die Beugung entstehen die 13 Ordnungen des SIM-Beleuchtungsmusters 32 (vgl. Fig. 3). Sie sind in Teilfigur 4c) dargestellt und die entsprechenden Amplituden, die sich durch die Interferenz der leuchtenden Punkte gemäß Teilbild 4b) (entsprechend Punkte in der Pupille 26 der Fig. 3) ergeben, sind ebenfalls eingetragen. Bis hierin wäre es möglich, die Amplituden der einzelnen Punkte durch eine entsprechende Verschiebung des Gitters 24 frei einzustellen. Gleiches gilt natürlich für den Fall, dass zur Erzeugung der Teilstrahlen 28a bis 28e kein Gitter 24 sondern beispielsweise Lichtleitfaserbündel verwendet werden, wie oben erläutert. Durch die Wahl der Rohbilderanzahl auf *n* gibt es folglich nur noch eine begrenzte Anzahl an Einstellmöglichkeiten, die sich zu der Situation in Teilfigur 4d) reduziert, wenn mit einer festen Schrittweite, die auf eine Grundgröße *p* zurückgeht, gearbeitet wird. Die positiven oder negativen ganzzahligen Vorfaktoren stellen dabei die Beugungsordnungen *m* dar, die zur Verdeutlichung in der Teilfigur 4e) noch einmal eigenständig bezeichnet werden. Im Ergebnis erhält man, wie Teilfigur 4f) zeigt, ein Muster an Beugungsordnungen in der Fourierdarstellung, das durch die Beugungsordnung *m*, die Zahl der Rohbilder *n* und die Schrittweite zwischen aufeinanderfolgenden Positionen des Beleuchtungsmusters 32 (bei Erzeugung durch ein 2D-Gitter auch des 2D-Gitters 24 gekennzeichnet sind.

In Ausführungsformen kann dafür gesorgt werden, dass keine nullte Beugungsordnung 30a vorhanden ist. Dann ist die Anzahl an benötigten Rohbildern automatisch gerade. Dazu kann ein Phasengitter Gitter 40 verwendet werden, dass keine nullte Beugungsordnung aufweist (Literatur nötig). Wird ein SLM in Off-Axis-Konfiguration verwendet, so kann ein Phasenmuster angezeigt werden, das einem Gitter ohne nullte Beugungsordnung 30a entspricht. Alternativ oder zusätzlich kann in einer Pupillenebene des Beleuchtungsstrahlengangs eine Blende eingeführt werden, die die den Strahl 28a der nullten Beugungsordnung 30a (zusätzlich) ausblendet. Die Blende 42 kann bevorzugt mechanisch verfahren werden und so nur bei Bedarf die nullte Beugungsordnung 30a blocken. Anstelle einer Blende 42 kann auch ein Lochspiegel verwendet werden. Dazu ist es besonders einfach, in der Bauweise der Fig. 2 den Spiegel 12 in einer Beleuchtungspupille anzuordnen und mit einem zentralen Loch 44 auszustatten, so dass der Teilstrahl 28a der zur nullten Beugungsordnung 30a führen würde, nicht zum Objektiv 8 reflektiert wird.

Hinsichtlich des theoretischen Hintergrundes gilt:
∘ Alle Rohbilder haben die gleichen SIM-Ordnungen *m*. Die Weitfeld-Ordnung ist *m* = 0
∘ Eine jede SIM-Ordnung *m* variiert ausschließlich mit der "Phase" *ϕ_{m,n}* mit der sie moduliert wird in jedem Rohbild *n*.
∘ Homogene Phasenschritte heißt, dass sich die Phase einer SIM-Ordnung zwischen zwei Rohbildern immer um den gleichen Wert Δ*ϕₘ* ändert.
∘ Dadurch ist *ϕ_{m,n}* = *n*Δ*ϕₘ* + ϑₘ, wobei *ϑₘ* Offset der Ordnung *m* ist.
∘ Damit alle Probenbereiche in den Vergleichsfeldbildern mit der gleiche Gesamtintensität bestrahlt werden, müssen in jedem Vergleichsweitfeldbild die SIM-Ordnungen in Summe verschwinden: ${\sum }_{∀ n} {e}^{i {Φ}_{m , n}} = 0$
o Dann beinhaltet die Summe aller Rohbilder nur die Weitfeld-Ordnung und entspricht demnach einem Weitfeldbild.

Es gibt die Möglichkeit, die individuellen Beleuchtungsmuster homogen, also gleichmäßig über der Phasenintervall von 0 bis 2*π* zu verteilen. Dann gilt:
∘ $Δ ϕm = \frac{2 π}{14} m = pm \left(mit p=\frac{2 π}{14}\right)$ und damit *ϕ_{m,n}* = *nmp* +ϑ*ₘ*
∘ Aufteilung der Rohbilder in zwei Gruppe durch die Bildnummer n

| | | |
|---|---|---|
| ▪ | n ist gerade (engl. even) | → *n*ₑᵥₑₙ = {0, 2, 4,..., 12} |
| ▪ | n ist ungerade (engl. odd) | → *n*_{odd} = {1, 3, 5,..., 13} |

▪ ${\sum }_{∀ {n}_{even}} {e}^{i {Φ}_{m , n}} = 0$
▪ ${\sum }_{∀ {n}_{odd}} {e}^{i {Φ}_{m , n}} = 0$
▪ Es entstehen zwei unabhängige Vergleichsweitfeldbilder.
▪ Falls die Phasen *ϕ_{m,n}* exakt getroffen werden, reicht eine Summation der Rohbilder beider Gruppen (gerade/ungerade) aus. Andernfalls können Fehler auftreten, die aber tolerierbar sein können, wenn die geforderte Bewegungsempfindlichkeit das zulässt.

Als Alternative werden die individuellen Beleuchtungsmuster ungleichmäßig über das Phasenintervall von 0 bis 2*π* verteilt. Dann gilt:
∘ Die Phase *ϕ_{m,n}* in jedem Rohbild ist aus einer ungleichmäßigen Verteilung.
∘ Aufteilung der Rohbilder in zwei Gruppe durch die Bildnummer n

| | | |
|---|---|---|
| ▪ | n ist gerade (engl. even) | → *n*ₑᵥₑₙ = {0, 2, 4,..., 12} |
| ▪ | n ist ungerade (engl. odd) | → *n*_{odd} = {1, 3, 5,..., 13} |

∘ Damit die Summe aller Rohbilder in beiden Teilgruppen nur die Weitfeld-Ordnung hat, muss für die jeweils letzte Phase (12 und 13) in beiden Gruppen wie folgt gewählt sein:
▪ ${\sum }_{∀ {n}_{even}} {e}^{i {Φ}_{m , n}} = 0 \to {ϕ}_{m , 12} = 0 - {\sum }_{∀ {n}_{even \neq 12}} {e}^{i {Φ}_{m , n}}$
▪ ${\sum }_{∀ {n}_{odd}} {e}^{i {Φ}_{m , n}} = 0 \to {ϕ}_{m , 13} = 0 - {\sum }_{∀ {n}_{even \neq 13}} {e}^{i {Φ}_{m , n}}$
▪ Es entstehen zwei unabhängige Weitfeldbilder.
∘ Wegen der Abweichung von der Phasengleichverteilung werden durch die Summation der Rohbilder die SIM-Ordnung nicht vollständig eliminiert.
∘ Je größer die Abweichung ist, umso mehr SIM-Information verbleibt im Vergleichsweitfeldbild.
∘ Die Summenbildung kann um Wichtungsfaktoren aus der Penrose-Pseudo-Inversen aus der Mixing Matrix erweitert werden. Hierdurch wird die SIM-Ordnung deutlich besser von der Weitfeld-Ordnung getrennt.
∘ Dies funktioniert gut bis 1% Fehler und sehr gut bis 0.1%.
∘ Erzeugung des Phasenmusters: *ϕ_{m,n}* = *nmp*
▪ Jede der 5 Ordnungen im Amplitudenspektrum des Gitters im Lattice SIM kann beliebige Werte annehmen, indem das Gitter in der Zwischenbildebene verschoben wird (Fig. 4a).
▪ Eine Verschiebung um eine der Gitterperiode entlang dieser entspricht dabei einer Phase von 2*π*.
▪ Die Phase der zentrale Ordnung ϑ kann auf 0 normiert werden.
▪ Werden nur die beiden Hauptrichtungen des Gitter (Fig. 4b) als Bewegungsrichtung zugelassen, so gibt es nur noch zwei unabhängige Phasen α und β.
▪ α und β wird wie folgt gewählt: $α = 3 ⋅ \frac{2 π}{14} ⋅ n = 3 p ⋅ n$ und $β = 2 ⋅ \frac{2 π}{14} ⋅ n = 2 p ⋅ n$
▪ Die Phasen der SIM-Ordnungen (Autokorrelation der Amplitudenordnungen) zeigen 13 Ordnungen mit jeweils verschiedenen Phasen (Fig. 4c).
▪ Dies gewährleitstet die gewünschten Phasen *ϕ_{m,n}* = *nmp* (Fig. 4c-f).
▪ Das Gitter muss demnach entlang seiner beiden Gitterrichtungen um jeweils $\frac{3}{14}$ bzw. $\frac{2}{14}$ der Gitterperiode bewegt werden.
▪ Die Reihenfolge der 14 Gitterpositionen ist egal. Werden erst die geraden und dann erst die ungeraden Rohbilder aufgenommen, so wird der zeitliche Abstand zwischen den beiden Vergleichsweitfeldbildern der Probe maximiert, was die Sensitivität der Bewegungsdetektion maximiert.

Dass durch die Aufsummation der beiden Rohbildgruppen jeweils ein Vergleichsweitfeldbild entsteht, zeigt folgende Rechnung:
Nachweis von ${\sum }_{∀ {n}_{even}} {e}^{{iΦ}_{m , n}} = 0$ $\begin{matrix}{\sum }_{∀ {n}_{even}} {e}^{{iΦ}_{m , n}} = {\sum }_{n = 0}^{n = 6} {e}^{i \left(2nmp+{ϑ}_{m}\right)} = {\sum }_{n = 0}^{n = 6} {e}^{{iϑ}_{m} {\left({e}^{i 2 mp}\right)}^{n}} = {\sum }_{n = 0}^{q - 1} {ar}^{n} = a \frac{1 - {r}^{q}}{1 - r} = a \frac{1 - {\left({e}^{i 2 mp}\right)}^{q}}{1 - {e}^{imp}} \\ = a \frac{1 - {e}^{i 2 m \frac{2 π}{14} 7}}{1 - {e}^{imp}} = a \frac{1 - {e}^{im 2 π}}{1 - {e}^{imp}} = a \frac{1 - 1}{1 - {e}^{imp}} = 0\end{matrix}$ mit: $q = 7 ; a = {e}^{{iϑ}_{m}} ; r = {e}^{i 2 mp} ; n = 2 k ; p = \frac{2 π}{14}$ und: ${\sum }_{n = 0}^{q - 1} {ar}^{n} = a \frac{1 - {r}^{q}}{1 - r}$

Nachweis von ${\sum }_{∀ {n}_{odd}} {e}^{{iΦ}_{m , n}} = 0$ $\begin{matrix}{\sum }_{∀ {n}_{odd}} {e}^{{iΦ}_{m , n}} = {\sum }_{n = 0}^{n = 6} {e}^{i \left(\left(2n+1\right)mp+{ϑ}_{m}\right)} = {\sum }_{n = 0}^{n = 6} {e}^{i \left({ϑ}_{m}+mp\right)} {\left({e}^{i 2 mp}\right)}^{n} = {\sum }_{n = 0}^{q - 1} {ar}^{n} = a \frac{1 - {r}^{q}}{1 - r} = a \frac{1 - {\left({e}^{i 2 mp}\right)}^{q}}{1 - {e}^{imp}} \\ = a \frac{1 - {e}^{i 2 m \frac{2 π}{14} 7}}{1 - {e}^{imp}} = a \frac{1 - {e}^{im 2 π}}{1 - {e}^{imp}} = a \frac{1 - 1}{1 - {e}^{imp}} = 0\end{matrix}$ mit: $q = 7 ; a = {e}^{i \left(ϑm+mp\right)} ; r = {e}^{i 2 mp} ; n = 2 k ; p = \frac{2 π}{14}$ und wieder ${\sum }_{n = 0}^{q - 1} {ar}^{n} = a \frac{1 - {r}^{q}}{1 - r}$

## Patentansprüche

1. Verfahren zur Bewegungsdetektion bei hochauflösender SIM-Mikroskopie einer Probe (4), wobei das Verfahren aufweist
- Erzeugen von n Rohbildern der Probe (4) durch Beleuchten der Probe (4) mit einem in mindestens einer Schnittebene 2D-periodischen Beleuchtungsmuster (32) aus hellen Spots, wobei für jedes der n Rohbilder eine individuelle Position des Beleuchtungsmusters (32) in einer Probenebene verwendet wird und die individuellen Positionen sich über ein Phasenintervall von 0 bis 2π verteilen, und
**dadurch gekennzeichnet, dass**
- eine gerade Anzahl an Rohbildern erzeugt wird,
- die Rohbilder aufsteigend gemäß ihrer jeweiligen individuellen Position im Phasenintervall von 0 bis 2π durchnummeriert werden und
- das Verfahren weiter aufweist: Zusammenfassen aller ungeradzahlig nummerierten Rohbilder zu einem ersten Vergleichsweitfeldbild der Probe (4) und Zusammenfassen aller geradzahlig nummerierten Rohbilder zu einem zweiten Vergleichsweitfeldbild der Probe (4) und Vergleichen des ersten mit dem zweiten Vergleichsweitfeldbild zur Bewegungsdetektion.

2. Verfahren nach Anspruch 1, **dadurch gekennzeichnet, dass** dem Beleuchtungsmuster (32) m Beugungsordnungen zugeordnet sind, wobei m eine positive ungerade ganze Zahl ist, und dass *n = m* + *z* gewählt wird, wobei z eine positive ungerade ganze Zahl mit bevorzugt z = 1 ist.

3. Verfahren nach Anspruch 2, **dadurch gekennzeichnet, dass** aus den Rohbildern ein hochaufgelöstes Weitfeldbild erzeugt wird, wenn die Bewegungsdetektion ergab, dass eine vorbestimmte Maximalbewegung nicht überschritten wurde, und/oder dass aus den Rohbildern ein hochaufgelöstes Weitfeldbild erzeugt und dieses mit einem Bewegungshinweis versehen wird, wenn die Bewegungsdetektion ergab, dass eine vorbestimmte Maximalbewegung überschritten wurde, wobei bevorzugt der Bewegungshinweis einen Bildbereich angibt, in dem ein vorbestimmter Unterschiedsschwellwert zwischen dem ersten und dem zweiten Vergleichsweitfeldbild überschritten ist.

4. Verfahren nach einem der obigen Ansprüche, **dadurch gekennzeichnet, dass** die individuellen Positionen des Beleuchtungsmusters (32) so nacheinander eingestellt werden, dass zuerst alle geradzahlig nummerierten Rohbilder und danach alle ungeradzahlig nummerierten Rohbilder aufgenommen werden.

5. Verfahren nach einem der obigen Ansprüche, **dadurch gekennzeichnet, dass** die individuellen Positionen des Beleuchtungsmusters (32) hinsichtlich aller der Nummerierung direkt aufeinanderfolgender Rohbilder um einen Phasenschritt von 2π/*n* beabstandet sind oder um einen Phasenschritt beabstandet sind, der von 2π/*n* um maximal 2%, bevorzugt um maximal 1%, besonders bevorzugt um maximal 0,5% abweicht.

6. Verfahren nach einem der obigen Ansprüche, **dadurch gekennzeichnet, dass** im Schritt des Erzeugens des hochaufgelösten Weitfeldbildes dieses aus geradzahlig und aus ungeradzahlig nummerierten Rohbildern erzeugt wird.

7. Verfahren nach einem der obigen Ansprüche, **dadurch gekennzeichnet, dass** das Zusammenfassen der ungeradzahlig nummerierten Rohbilder und der geradzahlig nummerierten Rohbilder jeweils durch Aufsummieren erfolgt und optional beim Aufsummieren die ungeradzahlig nummerierten Rohbilder und die geradzahlig nummerierten Rohbilder jeweils mit einem individuellen Wichtungsfaktor multipliziert werden.

8. Mikroskop zur hochauflösenden SIM-Mikroskopie einer Probe (4), das aufweist
- einen Beleuchtungsstrahlengang zum Beleuchten der Probe (4), wobei der Beleuchtungsstrahlengang mindestens in einer Schnittebene ein periodisches Beleuchtungsmuster (32) aus hellen Spots ist, auf die Probe (4) einstrahlt,
- einen Detektionsstrahlengang zum Weitfeldabbilden der beleuchteten Probe (4) auf einen Detektor, und
- eine Steuereinrichtung, die den Beleuchtungsstrahlengang zum Verschieben des Beleuchtungsmusters (32) in der Probe (4) ansteuert und den Detektor ausliest und ausgebildet ist zum
-- Erzeugen von n Rohbildern der Probe (4) durch Beleuchten der Probe (4), wobei das Beleuchtungsmuster (32) für jedes der n Rohbilder (30) eine individuelle Position in einer Probenebene hat und die individuellen Positionen über ein Phasenintervall von 0 bis 2π verteilt sind,
**dadurch gekennzeichnet, dass**
- die Steuereinrichtung weiter ausgebildet ist
-- eine gerade Anzahl an Rohbilder aufzunehmen,
-- die Rohbilder aufsteigend gemäß der jeweiligen individuellen Position des Beleuchtungsmusters (32) im Phasenintervall von 0 bis 2π durchzunummerieren, und
-- alle ungeradzahlig nummerierten Rohbilder zu einem ersten Vergleichsweitfeldbild der Probe (4) und alle geradzahlig nummerierten Rohbilder zu einem zweiten Vergleichsweitfeldbild der Probe (4) zusammenzufassen und das erste mit dem zweiten Vergleichsweitfeldbild zur Bewegungsdetektion zu vergleichen.

9. Mikroskop nach Anspruch 8 **dadurch gekennzeichnet, dass** dem Beleuchtungsmuster (32) m Beugungsordnungen zugeordnet sind, wobei m eine positive ungerade ganze Zahl ist, und dass die Steuereinrichtung n = m + z wählt, wobei z eine positive ungerade ganze Zahl mit bevorzugt z = 1 ist.

10. Mikroskop nach Anspruch 8 oder 9, **dadurch gekennzeichnet, dass** die Steuereinrichtung ausgebildet ist, aus den geradzahlig nummerierten und den ungeradzahlig nummerierten Rohbildern ein hochaufgelöstes Weitfeldbild zu erzeugen, wenn die Bewegungsdetektion ergab, dass eine vorbestimmte Maximalbewegung nicht überschritten wurde, und/oder aus den geradzahlig nummerierten und den ungeradzahlig nummerierten Rohbildern ein hochaufgelöstes Weitfeldbild zu erzeugen und dieses mit einem Bewegungshinweis zu versehen, wenn die Bewegungsdetektion ergab, dass die vorbestimmte Maximalbewegung überschritten wurde, wobei bevorzugt der Bewegungshinweis einen Bildbereich angibt, in dem ein vorbestimmter Unterschiedsschwellwert zwischen dem ersten und dem zweiten Vergleichsweitfeldbild überschritten ist.

11. Mikroskop nach einem der Ansprüche 8 bis 10, **dadurch gekennzeichnet, dass** die Steuereinrichtung ausgebildet ist, die individuellen Positionen des Beleuchtungsmusters (32) so nacheinander einzustellen, dass zuerst alle geradzahlig nummerierten Rohbilder und danach alle ungeradzahlig nummerierten Rohbilder aufgenommen werden.

12. Mikroskop nach einem der Ansprüche 8 bis 11, **dadurch gekennzeichnet, dass** die Steuereinrichtung ausgebildet ist, die Positionen des Beleuchtungsmusters (32) so einzustellen, dass die Positionen des Beleuchtungsmusters (32) aller hinsichtlich der Nummerierung direkt aufeinanderfolgender Rohbilder um einen Phasenschritt von 2π/14 beabstandet sind oder um einen Phasenschritt beabstandet sind, der von 2π/14 um maximal 2%, bevorzugt um maximal 1%, besonders bevorzugt um maximal 0,5% abweicht.

13. Mikroskop nach einem der Ansprüche 8 bis 12, **dadurch gekennzeichnet, dass** die Steuereinrichtung ausgebildet ist, die sieben ungeradzahlig nummerierten Rohbilder und die sieben geradzahlig nummerierten Rohbilder jeweils durch Aufsummieren zusammenzufassen und dabei optional die sieben ungeradzahlig nummerierten Rohbilder und die sieben geradzahlig nummerierten Rohbilder jeweils mit einem individuellen Wichtungsfaktor zu multiplizieren.
